# EUROPEAN PATENT APPLICATION

(11) **EP 2 506 019 A1**
(43) Date of publication of application: **03.10.2012**
(21) Application number: 11182864.6
(22) Date of filing: 27.09.2011
(51) Int. Cl.: G01P 21/00, G01C 25/00

(54) **Status simulation testing system and method for an angular velocity sensor**

(30) Priority: 01.04.2011 TW 100111542
(71) Applicant: Askey Technology (Jiangsu) Ltd., Economic-Technological Development Area Wujiang Jiangsu (CN); Askey Computer Corp., New Taipei City 235 (TW)
(72) Inventor: Ou, Bing-Cheng, New Taipei City 241 (TW); Sheng, Tzu-Haomr, New Taipei City 235 (TW); Hsieh, Ching-Feng, Taipei City 108 (TW)
(74) Representative: Bonvicini, Davide

(57) **Abstract**

A status simulation testing method is for use in testing a portable device having at least one angular velocity sensor and includes positioning the portable device on an oblique plane; moving and flinging the portable device at an increasing velocity to enable the portable device to move at an acceleration and an angular velocity; generating a sensing value by the angular velocity sensor of the portable device; and determining whether a sensing operation of the angular velocity sensor of the portable device is functioning well according to the sensing value. Accordingly, the method not only simulates a usage status of the portable device, but also tests the sensor of the portable device quickly, consistently, and accurately. A status simulation testing system is further introduced.

## Description

### FIELD OF THE INVENTION

The present invention relates to testing systems and methods, and more particularly, to a system and method for testing status simulation of a portable device having at least one angular velocity sensor.

### BACKGROUND OF THE INVENTION

A portable data terminal (PDT), such as a mobile communication device, usually comprises therein a plurality of sensors to meet functional requirements. The sensors of the PDT enable the PDT to perform specific functions. For example, a gravity sensor is for use in sensing a velocity and a direction. An e-compass is for use in detecting an orientation and detecting whether the orientation of a screen changes. A position sensor detects the distance between the position sensor and a user so as to allow a screen to be started or shut down in a controllable manner. A light sensor is for use in detecting ambient light such that the contrast of the brightness of a screen can be put under control. A gyroscope is for use in detecting the angular velocity of the PDT.

To make sure that the sensors can function well, the sensor manufacturers usually perform just before sensor delivery a sensing characteristics test on a single sensor. The sensor will not be delivered to an application manufacturer, such as a PDT manufacturer, unless and until the result of the sensing characteristics test confirms that the sensor can function well. Taiwanese published Patent Application 200819760 discloses a sensor testing method, a sensor testing device, and a sensor operation teaching device, wherein the sensor testing device is for use in testing whether a sensor malfunctions, and whether a contact-switching phenomenon arises from a sensor in operation, so as to confirm whether the sensor is operating well.

However, a mistake is not uncommon in the installation of a plurality of sensors on the PDT by a manufacturer; as a result, a sensor erroneously installed may fail or the sensitivity of a sensor falls outside an allowable error range to thereby prevent the sensor from functioning well.

For example, to test an angular velocity sensor, such as a gyroscope, of a PDT, a test worker has to fling the angular velocity sensor in order to produce the angular velocity thereof and then inspect the angular velocity sensor with the naked eye to determine whether the angular velocity sensor performs a movement corresponding to an application program with a view to determining whether the angular velocity sensor is functioning well. In other words, according to the prior art, the generation of the angular velocity is coarsely simulated by means of a fling given by a test worker. However, the strength, velocity, and direction of a series of fling given by the same test worker seldom demonstrate constancy and consistency, and thus it is impossible to determine whether an angular velocity detector can function well.

Accordingly, it is imperative to put forth a method and a system, such as the ones disclosed in the present invention, for overcoming the aforesaid drawbacks of the prior art.

### SUMMARY OF THE INVENTION

It is an objective of the present invention to provide a status simulation testing technology whereby a test can be efficiently performed on a portable data terminal (PDT) having at least one angular velocity sensor.

Another objective of the present invention is to provide a status simulation testing technology for testing a portable data terminal (PDT) having a plurality of sensors.

In order to achieve the above and other objectives, the present invention provides a status simulation testing method for use in testing a portable data terminal (PDT) having at least one angular velocity sensor. The method comprises the steps of: disposing the PDT on a second oblique plane having a first oblique plane to enable the angular velocity sensor of the PDT to generate a sensing value corresponding to a three-dimensional space; moving and flinging the first oblique plane and the second oblique plane at an increasing velocity to enable the second oblique plane to have an acceleration and an angular velocity and enable the angular velocity sensor of the PDT to generate a sensing value; and analyzing and comparing a preset specification parameter and the sensing value to determine an operation status of the angular velocity sensor of the PDT.

In order to achieve the above and other objectives, the present invention provides a status simulation testing system for use in testing a portable data terminal (PDT) having at least one angular velocity sensor. The system comprises a base, a carrying unit, a moving unit, and a processing unit. The carrying unit is disposed on the base to form a first angle of inclination therebetween and comprises a fastening element for fixing the PDT in place, wherein a second angle of inclination is formed between the fastening element and the bas. The moving unit is connected to the carrying unit and adapted to fling the carrying unit to generate an acceleration thereof and an angular velocity thereof, such that the angular velocity sensors of the PDT generate a sensing value corresponding thereto. The processing unit stores a preset specification parameter and compares the specification parameter and the sensing value.

Compared with the prior art, the present invention discloses a status simulation testing method and system which are configured for use in testing a portable device comprising a plurality of sensors or an angular velocity sensor. In other words, given the use status manifested by the portable device and simulated according to the present invention, it is feasible to test the portable device to determine whether the sensors can function well. For example, to perform a detection process, the method and system of the present invention provide a simulated environment required for a use status regarding a position, a fling, an orientation, and lighting. Also, the testing method and system of the present invention are effective in testing and determining, in a short period of time and according to a preset specification parameter under the system conditions, whether the sensors are operating within a required parameter range or operating within an allowable error range. Hence, compared to the prior art, the present invention enables the sensors to yield test results quickly, consistently, and accurately.

### BRIEF DESCRIPTION OF THE DRAWINGS

Objectives, features, and advantages of the present invention are hereunder illustrated with specific embodiments in conjunction with the accompanying drawings, in which:
FIG. 1 is a flow chart of a status simulation testing method according to an embodiment of the present invention;
FIG. 2A is a schematic view of a status simulation testing system according to the first embodiment of the present invention;
FIG. 2B is a schematic view of a status simulation testing system according to the first embodiment of the present invention; and
FIG. 3 is a schematic view of a status simulation testing system according to the second embodiment of the present invention.

### DETAILED DESCRIPTION OF THE PREFERRED EMBODIMENTS

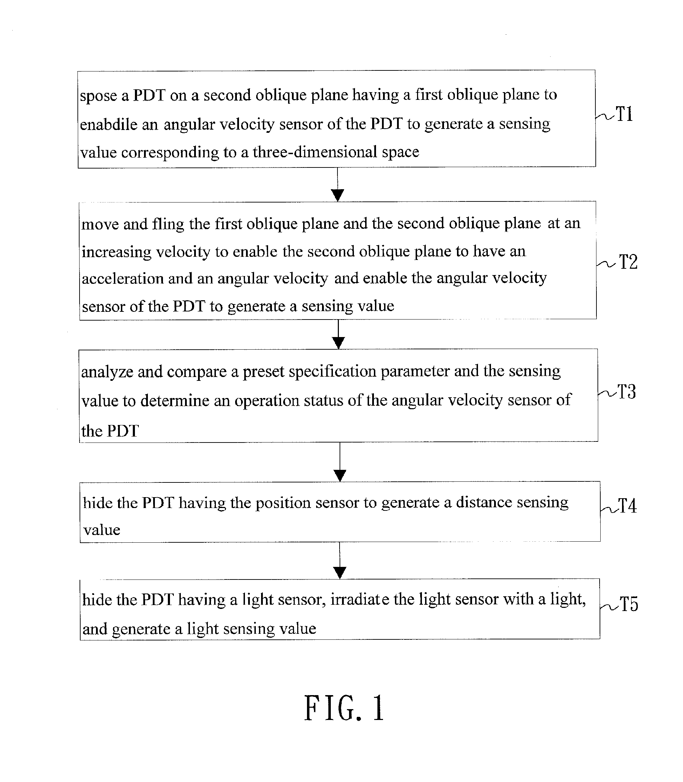

Referring to FIG. 1, there is shown a flow chart of a status simulation testing method according to an embodiment of the present invention. As shown in FIG. 1, the status simulation testing method is for use in testing a portable data terminal (PDT) having at least one angular velocity sensor. For example, the PDT is a mobile communication device, a handheld bar reading device, a portable data retrieving device, or a satellite navigation device. In this embodiment, the status simulation testing method comprises providing a use status environment required for testing the angular velocity sensor of the PDT, retrieving a sensing value corresponding to the angular velocity sensor, and determining whether the sensing value conforms with a rule for normal operation of the angular velocity sensor. Hence, the method of the present invention comprises providing a testing environment required for the angular velocity sensor and determining whether the angular velocity sensor is operating within an allowable error range. In another embodiment, a use status described above is further adjusted according to a sensor disposed on the PDT. For example, a use status can be adjusted according to any physical variations detected by a sensor in terms of velocity, orientation, brightness, and an angle, for example.

Also, in addition to the angular velocity sensor, the PDT comprises a gravity sensor, an e-compass, a position sensor, a light sensor, a gyroscope, and the like.

The gravity sensor, also known as a linear acceleration sensor, is for use in measuring a velocity and a displacement. The e-compass is a sensor for defining the orientation of the North Pole of the Earth by means of the terrestrial magnetic field. The e-compass not only keeps the definitions employed by a conventional compass in detecting a direction, but is also used in detecting a direction of the displayed contents of the screen of the PDT. For example, the screen contents are displayed in a horizontal direction or a vertical direction. The position sensor is for use in detecting the distance between a user and the position sensor. The light sensor is for use in detecting a change in the ambient light. For example, the PDT uses the light sensor to detect a change in the ambient light in the vicinity of the PDT and further enable the PDT to adjust the brightness of the screen of the PDT according to a result detected by the light sensor. The gyroscope is for use in detecting an orientation angle. Also, in an embodiment of the application of satellite navigation, the gyroscope operates in conjunction with the gravity sensor to enable the sensors to detect a traveling distance and a turning rate and thereby effectuate dead reckoning, thereby compensating for a weakness of satellite navigation, that is, an interruption of signal transmission at a region where signal transmission and reception is inefficient.

The status simulation testing method comprises a testing method T1 which comprises disposing the PDT on a second oblique plane having a first oblique plane to enable the angular velocity sensor of the PDT to generate a sensing value corresponding to a three-dimensional space (such as a space defined by an x-axis, a y-axis, and a z-axis). Hence, given a plane change simulated by the first oblique plane, the angular velocity sensor of the PDT can detect a change effected by the PDT and manifested on any plane of a three-dimensional space, for example, detecting a change effected by the PDT on the x-y plane, the x-z plane, and the y-z plane. Also, the angular velocity sensor of the PDT disposed on the first oblique plane can further detect a change effected by the PDT in the three-dimensional space according to a change manifested in a three-dimensional space and simulated by the second oblique plane, for example, detecting a change effected by the PDT in the x-y-z space. For instance, the testing method T1 provides the status simulation required for a test conducted by the gravity sensor and the e-compass.

Furthermore, a testing method T2 comprises moving and flinging the first oblique plane and the second oblique plane at an increasing velocity to not only enable the second oblique plane to have an acceleration and an angular velocity but also enable the angular velocity sensor of the PDT to generate a sensing value. Hence, in the aforesaid course of accelerated movement, the angular velocity sensor detects changes in the velocity and orientation of the PDT. In the aforesaid course of flinging, the angular velocity sensor detects the angular velocity in a tangential direction. In an embodiment, the flinging angle can be larger than 0° or equal to 90°. For example, the testing method T2 provides a status simulation required for a test conducted with the gravity sensor and the gyroscope.

A testing method T3 comprises analyzing and comparing a preset specification parameter and the sensing value to determine an operation status of the angular velocity sensor of the PDT. The preset specification parameter is defined according to the first oblique plane, the second oblique plane, the acceleration, the travel direction, and the flinging angle. For example, given the preset specification parameters x, y and z (x=3, y=4, z=5) of a simulated three-dimensional space defined by the first oblique plane and the second oblique plane, with the PDT lying on the first oblique plane and the second oblique plane, if the angular velocity sensor of the PDT measures the center of gravity of the PDT and determines that the center of gravity of the PDT is located at the specification parameters x, y and z, with x=3, y=4, z=5, it means that the angular velocity sensor is functioning well. Conversely, if the angular velocity sensor detects that the center of gravity of the PDT does not match the preset specification parameter, it means that at least one of the angular velocity sensor, the PDT, and firmware/software installed in the PDT is malfunctioning.

The simulated use status testing method further comprises a testing method T4 which comprises hiding the PDT having the position sensor to generate a distance sensing value. In this embodiment, a means of hiding is effectuated by a lid and adapted to provide a distance between the position sensor and the lid, thereby allowing the distance sensing value to be measured. In an embodiment, the position sensor is disposed on the PDT to enable the user to determine whether to turn on or turn off the display screen of the PDT held in the user's hand and being moved toward the user's ear, and the user performs the aforesaid determination process by making reference to the distance between the position sensor and the PDT.

The simulated use status testing method further comprises a testing method T5 which comprises hiding the PDT having a light sensor, irradiating the light sensor with a light, and generating a light sensing value. In an embodiment, the generation of light is simulated by turning on or turning off a light-emitting diode (LED), and the light thus generate is capable of uniform irradiation, that is, characterized by a consistent lighting condition in whatever environments. Hence, the light can simulate the use status of the light sensor as far as irradiation is concerned.

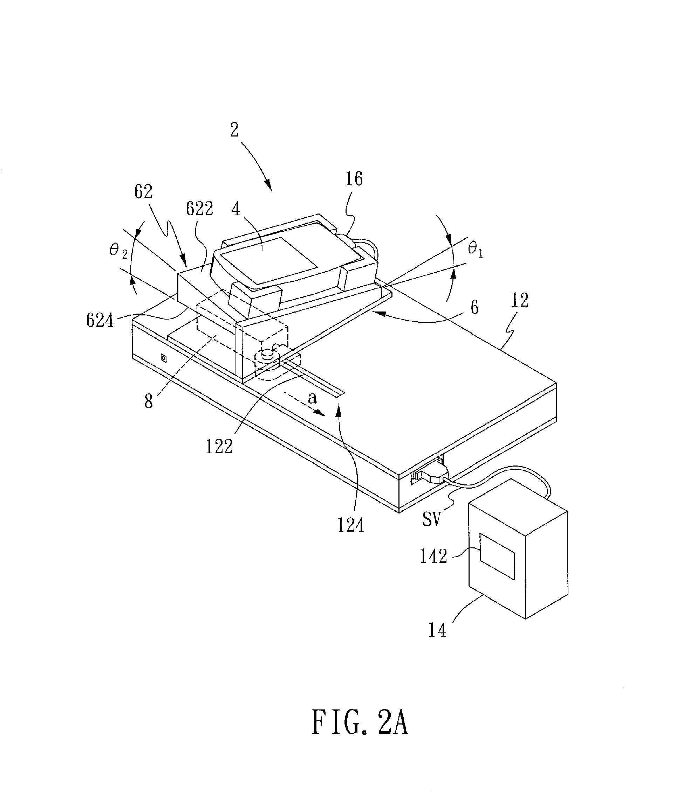

Referring to FIG. 2A, there is shown a schematic view of a status simulation testing system according to the first embodiment of the present invention. As shown in FIG. 2A, the status simulation testing system 2 is for use in testing a PDT 4 having at least one angular velocity sensor. The PDT 4 further comprises at least one of a gravity sensor, an e-compass, a position sensor, a light sensor, and a gyroscope.

The status simulation testing system 2 comprises a carrying unit 6, a moving unit 8, a processing unit 14, and a base 12. The carrying unit 6 is disposed on the base 12 to form a first angle of inclination θ₁ therebetween and comprises a fastening element 62 for fixing the PDT 4 in place. In addition, the fastening element 62 is further defined with a first oblique plane 622 and a second oblique plane 624. The first angle of inclination θ₁ is formed between the first oblique plane 622 and the base 12. A second angle of inclination θ₂ is formed between the second oblique plane 624 and the first oblique plane 622. The inclination direction resulting from the second angle of inclination θ₂ is the travel direction of the moving unit 8 for producing the angular velocity, and extends downward from the fastening element 62 to the base 12. The fastening element 62 is disposed on the carrying unit 6 to form an oblique plane.

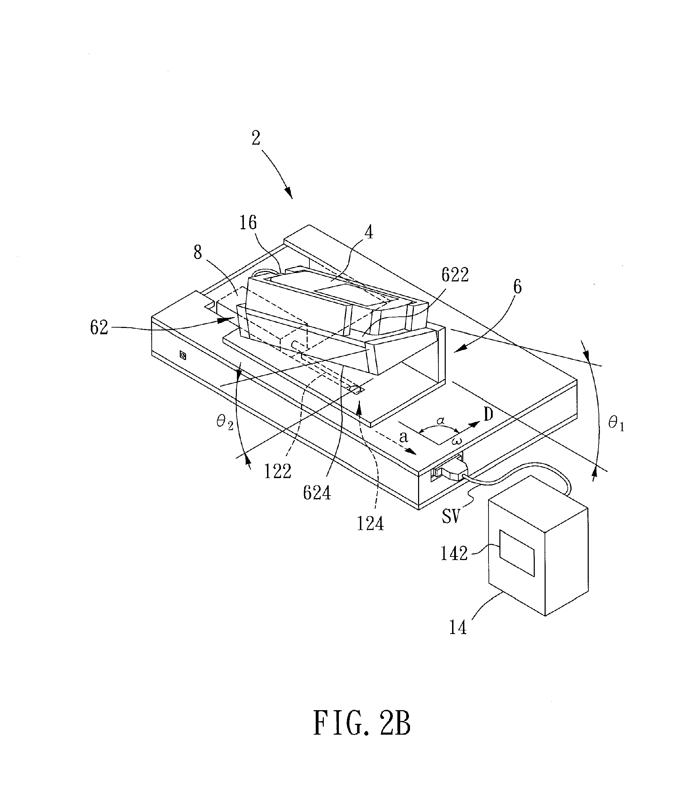

The moving unit 8 is connected to the carrying unit 6. The moving unit 8 is for use in flinging the carrying unit 6 to produce an acceleration A and an angular velocity ω. In this embodiment, the moving unit 8 moves along a moving track 122 disposed on the base 12. The moving unit 8 moves along the moving track 122 to move the carrying unit 6. For example, the moving unit 8 flings the carrying unit 6 at a predetermined position 124 of the moving track 122 and in a direction D with an angle α therebetween, such that the carrying unit 6 is moved at the angular velocity ω, as shown in FIG. 2B. The angle α can be larger than 0° or equal to 90°. Furthermore, the moving unit 8 is a device propelled pneumatically or hydraulically.

A processing unit 14 is for use in storing a preset specification parameter 142 and is adapted to analyze and compare the specification parameter 142 and the sensing value SV so as to determine the operation status of the angular velocity sensor of the PDT 4. For example, the processing unit 14 can be a computer or a single chip. The specification parameter 142 can be tabulated and stored in the computer or the single chip, such that standard parameter values of the status simulation testing system 2 in simulated environments are recorded by tabulation. Hence, the specification parameter 142 is determined according to related status simulation conditions, such as the first and second angles of inclination θ₁, θ₂, the acceleration A, the traveling direction D, the angular velocity ω, and the turning angle α.

Upon confirmation of the related status simulation conditions pertaining to the carrying unit 6 and the moving unit 8, related parameters under the simulation conditions and statuses are recorded in the form of the specification parameter 142. In the situation where the angular velocity sensor is disposed at the status simulation testing system 2, the PDT 4 will be regarded as a conforming product, provided that the angular velocity sensor detects that the sensing value SV matches the specification parameter 142, or provided that the sensing value SV still falls within an allowable error range of the angular velocity sensor. Conversely, the PDT 4 will be regarded as a non-conforming product, provided that the angular velocity sensing value SV does not match the specification parameter 142 but falls outside an allowable error range of the angular velocity sensor.

The status simulation testing system 2 further comprises an electrical transmission unit 16 and the PDT 4 electrically connected thereto. The electrical transmission unit 16 is for use in transmitting the sensing value SV to the processing unit 14. For example, the electrical transmission unit 16 is RS-232, USB, IEEE 1394, or I2C transmission interfaces. In this regard, the electrical transmission unit 16 is disposed in the carrying unit 6 such that, with the PDT 4 being disposed at the carrying unit 6, the sensing value SV of the PDT 4 can be conveyed to the processing unit 14 by means of the electrical transmission unit 16. In an embodiment, the electrical transmission unit 16 is disposed inside the PDT 4, and the sensing value SV is conveyed to the processing unit 14 by wireless transmission using the electrical transmission unit 16. For example, the electrical transmission unit 16 operates in accordance with a wireless transmission standard, such as wifi or blue-tooth.

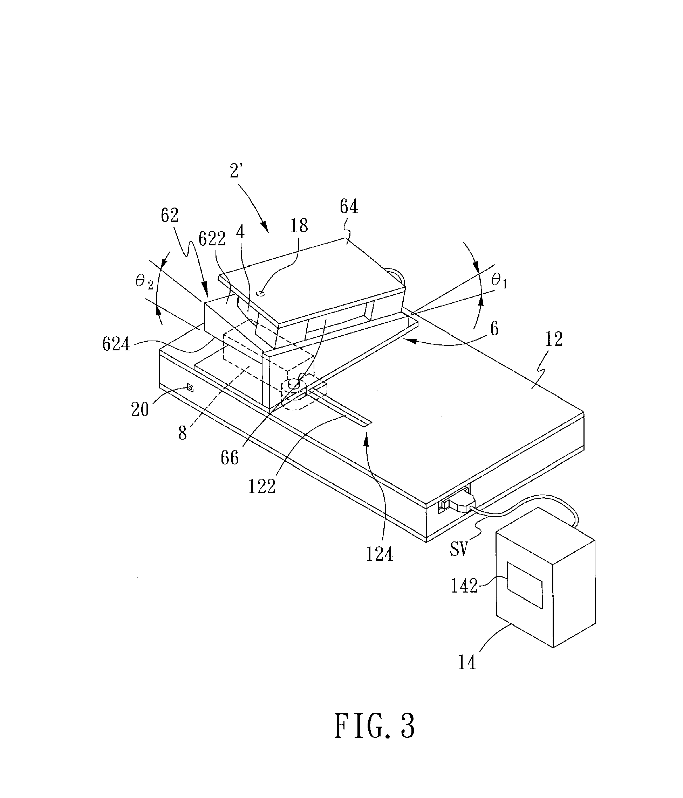

Referring to FIG. 3, there is shown a schematic view of a status simulation testing system according to the second embodiment of the present invention. As shown in FIG. 3, a status simulation testing system 2' is for use in testing the PDT 4 having at least one angular velocity sensor. The status simulation testing system 2' comprises the carrying unit 6, the moving unit 8, and the processing unit 14. The carrying unit 6 of the status simulation testing system 2' further comprises a lid 64. The lid 64 is for use in covering the fastening element 62 to form a receiving space 66 defined therebetween.

With the fastening element 62 being covered by the lid 64, it is impossible for an external light ray to reach the receiving space 66; hence, the receiving space 66 is suitable for use in a lightproof status simulation test. The test is conducted by means of a lighting unit 18 disposed in the receiving space 66 and adapted to test and determine whether the PDT 4 disposed in the receiving space 66 and provided with a light sensor functions well. For example, if the light sensor detects light emitted from the lighting unit 18, it will be feasible to simulate a lighted environment where the light sensor is present. Conversely, if the light sensor does not detect any light emitted from the lighting unit 18, it will be feasible to simulate an unlighted environment where the light sensor is present.

Furthermore, in the situation where the lid 64 covers the fastening element 62, the feasibility of performing a status simulation test about the distance between the lid 64 and the position sensor can be determined according to whether the lid 64 approaches the position sensor. The test further evaluates and determines whether to control the start and shutdown of the display screen of the PDT 4 according to a reduction in the distance between the lid 64 and the PDT 4 whenever the position sensor detects that the lid 64 approaches the PDT 4. Hence, with status simulation, it is feasible to simulate the approach of a user to the position sensor.

The status simulation testing system 2 further comprises a power supply unit 20. The power supply unit 20 is electrically connected to at least one of the PDT 4, the lighting unit 18, and the moving unit 8 so as to supply power thereto.

Compared with the prior art, the present invention provides a status simulation testing method and system for testing the PDT having an angular velocity sensor or having a plurality of sensors comprising an angular velocity sensor. Hence, given a simulated use status of the PDT, it is feasible to test and determine whether the sensors of the PDT can function well. For example, to conduct the test, the method and system of the present invention provide a simulated environment required for a use status, such as a position, a fling, an orientation, and lighting. The testing method and system of the present invention are effective in testing and determining, in a short period of time and according to a preset specification parameter under the system conditions, whether the sensors are operating within a required parameter range or operating within an allowable error range. Hence, compared to the prior art, the present invention enables the sensors to yield test results quickly, consistently, and accurately.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A status simulation testing system for testing a portable data terminal (PDT) having at least one angular velocity sensor, the status simulation testing system comprising:
a base;
a carrying unit disposed on the base to form a first angle of inclination therebetween and comprising a fastening element for fixing the PDT in place, wherein a second angle of inclination is formed between the fastening element and the base;
a moving unit connected to the carrying unit and adapted to fling the carrying unit to generate an acceleration thereof and an angular velocity thereof, such that the angular velocity sensors of the PDT generate a sensing value corresponding thereto; and
a processing unit for storing a preset specification parameter and comparing the specification parameter and the sensing value.

2. The status simulation testing system of claim 1, further comprising an electrical transmission unit electrically connected to the PDT and adapted to send the sensing value to the processing unit.

3. The status simulation testing system of claim 1, wherein the carrying unit further comprises a lid for covering the fastening element to form a receiving space therebetween.

4. The status simulation testing system of claim 3, further comprising a lighting unit disposed within the receiving space of the carrying unit and adapted to emit light.

5. The status simulation testing system of claim 4, further comprising a power supply unit electrically connected to at least one of the PDT, the lighting unit, and the moving unit so as to supply power thereto.

6. The status simulation testing system of claim 1, wherein an inclination direction resulting from the second angle of inclination is a travel direction of the moving unit for producing the angular velocity and extends downward from the fastening element to the base, the fastening element being disposed on the carrying unit to form an oblique plane.

7. The status simulation testing system of claim 1, wherein the moving unit flings the carrying unit at a flinging angle larger than 0°.

8. The status simulation testing system of claim 7, wherein the moving unit flings the carrying unit at the flinging angle equal to 90°.

9. A status simulation testing method for testing a portable data terminal (PDT) having at least one angular velocity sensor, the method comprising the steps of:
disposing the PDT on a second oblique plane having a first oblique plane to enable the angular velocity sensor of the PDT to generate a sensing value corresponding to a three-dimensional space;
moving and flinging the first oblique plane and the second oblique plane at an increasing velocity to enable the second oblique plane to have an acceleration and an angular velocity and enable the angular velocity sensor of the PDT to generate a sensing value; and
analyzing and comparing a preset specification parameter and the sensing value to determine an operation status of the angular velocity sensor of the PDT.

10. The status simulation testing method of claim 9, further comprising the step of hiding the PDT having a position sensor to generate a distance sensing value.

11. The status simulation testing method of claim 10, further comprising the step of hiding the PDT having a light sensor, irradiating the light sensor with a light, and generating a light sensing value.
